# EUROPÄISCHE PATENTSCHRIFT

(11) **EP 4 052 339 B1**
(45) Veröffentlichungstag und Bekanntmachung des Hinweises auf die Patenterteilung: **28.01.2026**
(21) Anmeldenummer: 20771279.5
(22) Anmeldetag: 10.09.2020
(51) Int. Cl.: H02J 3/00, B60L 55/00

(54) **MOBILE ENERGIEVERSORGUNGSEINHEIT ZUR UNTERBRECHUNGSFREIEN STROMVERSORGUNG EINES EXTERNEN STROMNETZES**
MOBILE POWER SUPPLY UNIT FOR UNINTERRUPTIBLE POWER SUPPLY OF AN EXTERNAL ELECTRICAL GRID
UNITÉ D'ALIMENTATION ÉLECTRIQUE MOBILE POUR ALIMENTATION SANS COUPURE D'UNE GRILLE ÉLECTRIQUE EXTERNE

(30) Priorität: 07.02.2020 DE 202020100673 U
(43) Veröffentlichungstag der Anmeldung: 07.09.2022
(73) Patentinhaber: Schamberger, Paul, 91795 Dollnstein (DE)
(72) Erfinder: UTZ, Sebastian, 85092 Kösching (DE)
(74) Vertreter: Staeger & Sperling Partnerschaftsgesellschaft mbB
(86) Internationale Anmeldenummer: PCT/EP2020/075295
(87) Internationale Veröffentlichungsnummer: WO 2021/155963

(56) Entgegenhaltungen:
- EP-A1- 3 186 870
- US-A1- 2020 062 138

## Beschreibung

Die Erfindung betrifft eine mobile Energieversorgungseinheit zur unterbrechungsfreien Stromversorgung eines externen Stromnetzes.

Aus dem Stand der Technik sind Notstromaggregate und Systeme zur unterbrechungsfreien Stromversorgung (USV) bekannt, welche zur Stromversorgung elektrischer Netze verwendet werden. Dabei handelt es sich meist um leistungsstarke Dieselgeneratoren, welche beispielsweise eine Leitung von bis zu 800kVA haben. Diese werden unter anderem von Energieversorgern genutzt, um bei Verbrauchsspitzen, welche beispielsweise bei Großveranstaltungen auftreten können, das Stromnetz zu stabilisieren. Muss ein Teil des Stromnetzes für Wartungs- oder Umbauarbeiten abgetrennt bzw. an einer vorbestimmten Stelle unterbrochen werden, können solche Notstromaggregate auch zur zeitweisen Stromversorgung des abgetrennten Teils verwendet werden.

Eine weitere Verwendung stellt das Laden von Elektro-Fahrzeugen abseits sonstiger Lademöglichkeiten dar.

Zwar ist Diesel als Treibstoff für solche Notstromaggregate leicht verfügbar, einfach zu transportieren und der Tank des Notstromaggregats während des Betriebs befüllbar, jedoch sind Dieselgeneratoren sehr wartungsintensiv. Hinzukommt, dass die hohen Anforderungen an Dieselgeneratoren bezüglich des Abgas- bzw. Schadstoffausstoßes dazu führen, dass alte Dieselgeneratoren nicht mehr betrieben werden dürfen und die Produktions- und Anschaffungskosten für neue Dieselgeneratoren steigen.

Ferner ist problematisch, dass Notstromaggregate bzw. USVs, welche den Strom unmittelbar erzeugen, vergleichsweise träge sind und nicht dynamisch auf Laständerungen reagieren können.

Sind in dem Stromnetz, welches von solchen Notstromaggregaten versorgt wird, Anlagen zur Stromerzeugung, wie beispielsweise Photovoltaik-Anlagen, vorhanden, geht ein eventueller Energieüberschuss verloren.

Ein mobiles Energiesystem zur Aufnahme, Zwischenspeicherung und Rückspeisung von Energie aus einem Stromnetz, ist beispielsweise aus der WO 2016/030151 A1 bekannt.

Der Erfindung liegt deshalb die Aufgabe zugrunde, die vorgenannten Nachteile zu überwinden und eine mobile Energieversorgungseinheit zur unterbrechungsfreien Stromversorgung eines externen Stromnetzes bereitzustellen, welche jedoch flexibel einsetzbar sein soll und das externe Stromnetz mit mehr Energie versorgen können soll, als ein interner Speicher der Energieversorgungseinheit bereitstellt.

Diese Aufgabe wird durch die Merkmalskombination gemäß Schutzanspruch 1 gelöst.

Erfindungsgemäß wird eine mobile Energieversorgungseinheit zur unterbrechungsfreien Stromversorgung eines externen Stromnetzes gemäß Anspruch 1 vorgeschlagen. Diese weist einen Energiespeicher, eine erste mit dem Energiespeicher elektrisch verbundene Schnittstelle zur Energieübertragung und eine zweite mit dem Energiespeicher elektrisch verbundene Schnittstelle zur Energieübertragung sowie eine Elektronik auf. Generell wird erfindungsgemäß unter Energie elektrische Energie verstanden, so dass der vorzugsweise über die erste Schnittstelle mit dem externen Stromnetz verbundene Energiespeicher als Spannungs- bzw. Stromquelle für das externe Stromnetz dient.

Erfindungsgemäß umfasst die Elektronik eine Ladelogik, durch welche ein Laden und Entladen des Energiespeichers über die erste Schnittstelle und die zweite Schnittstelle kontrolliert und geregelt wird. Die Ladelogik kann in einer vorteilhaften Weiterbildung zudem einen Spannungsteiler aufweisen, durch welchen beispielsweise eine über die zweite Schnittstelle zu geführte Energie für die Energieversorgung des externen Stromnetzes über die erste Schnittstelle und zugleich ein Laden des Energiespeichers ermöglicht wird. Eine Variante sieht entsprechend vor, dass die erste Schnittstelle ausgebildet ist, das externe Stromnetz durch ein Entladen des Energiespeichers mit Energie zu versorgen, und dass die zweite Schnittstelle ausgebildet ist, den Energiespeicher mit einer von einer externen Quelle bereitgestellten Energie zu laden. Erfindungsgemäß und die Flexibilität der mobilen Energieversorgungseinheit erhöhend ist vorgesehen, dass sowohl die erste als auch die zweite Schnittstelle bidirektional ausgebildet sind, so dass sowohl über die erste als auch über die zweite Schnittstelle ein Laden und ein Entladen des Energiespeichers möglich ist.

Die Energieversorgungseinrichtung kann beispielsweise auf einem Anhänger oder in bzw. an einem Fahrzeug angeordnet sein, so dass diese dadurch transportabel und mobil bzw. an verschiedenen Standorten flexibel einsetzbar ist.

Zusätzlich bzw. alternativ ist es bei einer weiteren vorteilhaften Ausführungsform vorgesehen, dass die Energieversorgungseinrichtung in einem Rahmen aufgenommen ist, welcher ein einfaches Verladen und einen einfachen Transport ermöglicht.

Die Erfindung sieht zudem vor, dass die Elektronik ausgebildet ist, das Laden und das Entladen des Energiespeichers über die erste Schnittstelle sowie das Laden und das Entladen über die zweite Schnittstelle zu überwachen und zu regeln. Sind die Schnittstellen entsprechend jeweils zum Laden und Entladen vorgesehen, ist die Elektronik zudem ausgebildet, ein zeitgleiches Laden des Energiespeichers über die erste und die zweite Schnittstelle oder ein zeitgleiches Entladen des Energiespeichers über die erste und die zweite Schnittstelle zu überwachen und zu regeln. Über die Zeit kann ein Laden und Entladen über die jeweilige Schnittstelle auch variieren, so dass das externe Stromnetz über die erste Schnittstelle zunächst mit Energie versorgt und der Energiespeicher entladen und anschließend der Energiespeicher über die erste Schnittstelle von dem externen Stromnetz mit Energie versorgt und der Energiespeicher geladen werden kann.

Der Energiespeicher bzw. der Akkumulator ist vorzugsweise aus einer Vielzahl von Zellen aufgebaut, wobei diese in zwei Gruppen geteilt sein können, von welchen eine erste Gruppe die Stromversorgung des externen Stromnetzes über die erste Schnittstelle bereitstellt und die Zellen der zweiten Gruppe über die zweite Schnittstelle geladen werden. Unterschreitet der Energieinhalt der ersten Gruppe einen vorbestimmten Wert, so dass die Energie- bzw. Stormversorgung des externen Stromnetzes nicht mehr möglich ist oder in naher Zukunft nicht mehr möglich sein wird, können einzelne Zellen bzw. alle Zellen einer Gruppe der jeweils anderen Gruppe zugeordnet werden. Entsprechend ist die Elektronik ausgebildet, zumindest den Ladezustand der einzelnen Zellen zu erfassen und die Zellen einer bestimmten Gruppe zuzuordnen und somit zu laden oder zu entladen.

Ein erfindungsgemäßer Grundgedanke ist es, dass die Energieversorgungseinheit ermöglicht, das externe Stromnetz mit Energie zu versorgen, und dass zugleich ein "betanken" des Energiespeichers der Energieversorgungseinheit über die zweite Schnittstelle möglich ist. Um ein möglichst flexibles "Nachtanken" über die zweite Schnittstelle zu ermöglichen, sieht eine vorteilhafte Weiterbildung vor, dass die zweite Schnittstelle als Weitbereichseingang ausgebildet ist und/oder die Elektronik einen Weitbereichswandler umfasst, welcher ausgebildet ist, eine über die zweite Schnittstelle zugeführte elektrische Energie für das Laden des Energiespeichers umzuwandeln. Hierdurch können unterschiedlichste Energie- bzw. Spannungsquellen an der zweiten Schnittstelle angeschlossen und zum Laden des Energiespeichers verwendet werden.

Ferner kann ein zusätzlicher Weitbereichswandler vorgesehen und ausgebildet sein, die elektrische Energie des Energiespeichers oder die über die zweite Schnittstelle zugeführte elektrische Energie für die Versorgung des elektrischen Netzes zu Wandeln und an der ersten Schnittstelle bereitzustellen.

Der Energiespeicher ist vorzugsweise ein Akkumulator und insbesondere ein Lithium-Ionen-Akkumulator.

Die vorliegend vorgeschlagene Energieversorgungseinheit ist insbesondere vorgesehen externe Stromnetze mit hohem Strombedarf vorübergehend mit Strom zu versorgen. Daher ist bei einer vorteilhaften Variante vorgesehen, dass die erste Schnittstelle ein Steckverbinder und insbesondere ein Hochstromsteckverbinder ist. Als Hochstromsteckverbinder wir hierbei ein Steckverbinder verstanden, welcher auf zumindest 120A ausgelegt ist.

Generell kann alternativ oder zusätzlich zu einem Steckverbinder für die erste Schnittstelle auch eine entsprechende Klemmvorrichtung vorgesehen sein, durch welche elektrische Leiter bzw. das externe Stromnetz ohne Stecker über die erste Schnittstelle mit der Energieversorgungseinheit verbindbar sind.

Um ein einfaches Laden des Energiespeichers über die zweite Schnittstelle zu vereinfachen, ist ferner vorzugsweise vorgesehen, dass die zweite Schnittstelle ebenfalls ein Steckverbinder und insbesondere ein Hochstromsteckverbinder ist. Die zweite Schnittstelle kann auch insbesondere als ein Typ 1-Stecker, eine Typ 1-Buchse, ein Typ 2-Stecker, eine Typ 2-Buchse, ein Combo-Stecker oder eine Combo-Buchse ausgebildet sein, um den Anschluss eines Elektro-Fahrzeugs zum Laden des Energiespeichers zu ermöglichen bzw. zu vereinfachen. Bei den vorgenannten Steckverbindern handelt es sich um die zum Zeitpunkt der Anmeldung am Markt verfügbaren und entsprechend den geltenden Normen spezifizierten Schnittstellen, mit er entsprechenden Polzahl, dem Steckgesicht, der entsprechenden Pol-Belegung und den weiteren für die Steckkompatibilität erforderlichen Spezifikationen. Da diese technischen Details allgemein bekannt sind, wird auf deren explizite Beschreibung verzichtet, wobei die jeweilige Spezifikation im Offenbarungsbereich der Anmeldung liegt. Neben solchen allgemein bekannten Steckverbindern können zudem auch markenrechtlich geschützte Steckverbinder vorgesehen werden, welche zum Anmeldezeitpunkt unter der Bezeichnung CHAdeMO-Stecker oder Tesla Supercharger bekannt sind. Als Steckverbinder für die zweite Schnittstelle können alternativ auch "Schuko"-Stecker oder andere CEE-Stecker bzw. Buchsen verwendet werden.

Wie beschrieben ist es besonders vorteilhaft, wenn die Energieversorgungseinheit auf einfache Weise ein Laden des Energiespeichers ermöglicht, bei welchem eine externe Energiequelle wie beispielsweise ein Elektro-Fahrzeug über die zweite Schnittstelle mit dem Energiespeicher verbunden ist. Hierfür sieht eine vorteilhafte Ausführungsform vor, dass die zweite Schnittstelle ausgebildet ist, mit einem Energiespeicher eines Elektro-Fahrzeugs verbunden zu werden und der Energiespeicher der Energieversorgungseinheit dadurch mit dem Energiespeicher des Elektro-Fahrzeugs verbindbar ist.

Ein weiterer Aspekt der Erfindung betrifft ein System aus einer erfindungsgemäßen Energieversorgungseinheit und einem externen Energiespeicher. Die Energieversorgungseinheit ist hierbei über ihre zweite Schnittstelle mit dem externen Energiespeicher verbindbar und der Energiespeicher der Energieversorgungseinheit durch den externen Energiespeicher elektrisch aufladbar. Entsprechend ist vorgesehen, dass die Energieversorgungseinheit zumindest zeitweise mit dem externen Energiespeicher verbunden ist und von diesem "betankt" wird.

Ebenfalls vorteilhaft ist, wenn das System ferner ein externes Stromnetz umfasst. Hierbei ist vorgesehen, dass die Energieversorgungseinheit über ihre erste Schnittstelle mit dem externen Stromnetz verbindbar bzw. verbunden ist und ausgebildet ist, elektrische Energie über die erste Schnittstelle an das externe Stromnetz abzugeben, wodurch dieses mit Energie versorgt wird. Alternativ oder zusätzlich ist vorgesehen, dass elektrische Energie über die erste Schnittstelle von dem externen Stromnetz zum Laden des Stromspeichers der Energieversorgungseinrichtung aufzunehmen, wodurch ein Energieüberschuss in dem externen Stromnetz genutzt werden kann um den Energiespeicher der Energieversorgungseinheit zu laden.

Zudem ist eine Variante des Systems von Vorteil, bei welcher der externe Energiespeicher ein Energiespeicher eines Elektro-Fahrzeugs ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

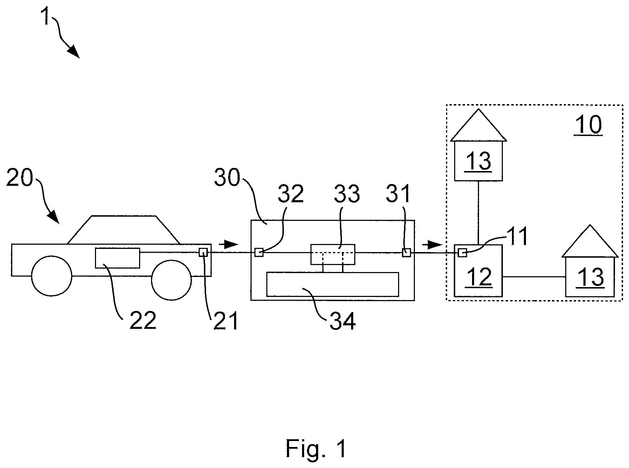

- Fig. 1: schematische Übersicht über ein System aus einer Energieversorgungseinheit, einem externen Stromnetz und einem externen Energiespeicher.

Dargestellt ist eine schematische Ansicht eines Systems 1, welches ein externes Stromnetz 10, ein Elektro-Fahrzeug 20 und eine mobile Energieversorgungseinheit 30 umfasst.

Muss das externe Stromnetz 10 von seiner ursprünglichen Stromversorgung getrennt werden, so dass die einzelnen Verbraucher 13 des externen Stromnetzes stromfrei bzw. von der Versorgung abgeschnitten wären, kann das externe Stromnetz 10 über seine Schnittstelle 11, welche beispielsweise an einem Verteiler 12 des externen Stromnetzes 10 vorgesehen ist, mit der ersten Schnittstelle 31 der Energieversorgungseinheit 30 verbunden werden, so dass der Energiespeicher 34 der Energieversorgungseinheit 30 das externe Stromnetz 10 über die erste Schnittstelle 31 sowie überwacht und geregelt durch eine Elektronik 33 der Energieversorgungseinheit 30 mit Energie bzw.

Strom versorgt.

Unterschreitet ein Ladestand des Energiespeichers 34, welcher als Akkumulator ausgebildet ist, einen vorbestimmten Wert, kann der Energiespeicher 34 über seine zweite Schnittstelle 32 parallel zu der Entladung über die erste Schnittstelle 31 aufgeladen werden.

Hierzu ist beispielhaft ein Elektro-Fahrzeug 20 mit einem gegenüber der Energieversorgungseinheit externen Energiespeicher 22 und einer Schnittstelle 21 dargestellt, welches den Energiespeicher 34 der Energieversorgungseinheit 30 über die zweite Schnittstelle 32 sowie überwacht und geregelt durch die Elektronik 33 lädt.

Alternativ zu einem Elektro-Fahrzeug 20 kann jedoch auch ein anderer externer Energiespeicher, wie auch eine zweite mobile Energieversorgungseinheit, vorgesehen werden, durch welche die "erste" Energieversorgungseinheit 30 bzw. deren Energiespeicher 34 geladen werden kann.

Sowohl die Energieversorgungseinheit 30 als auch eine eventuell vorhandene zweite Energieversorgungseinheit kann auf jeweils einem Anhänger montiert sein oder jeweils einen stabilen Rahmen aufweisen, so dass die Energieversorgungseinheit für den Transport geeignet, transportabel und an verschiedenen Standorten flexibel einsetzbar ist.

Ist die Energieversorgungseinheit 30 nicht über ihre erste Schnittstelle 31 verbunden und dadurch nicht in ihrer Mobilität eingeschränkt, kann diese beispielsweise zu einer Ladesäule für Elektro-Fahrzeuge transportiert und an dieser geladen werden.

Für den Fall, dass die Energieversorgungseinheit 30 über ihre erste Schnittstelle 31 mit dem externen Stromnetz 10 verbunden und dadurch in ihrer Mobilität eingeschränkt ist, kann die Energieversorgungseinheit 30 bzw. ihr Energiespeicher 34 über die zweite Schnittstelle 32 wiederholt und mehrfach geladen werden. Hierzu kann beispielsweise ein Elektro-Fahrzeug 20 oder ein anderer externer Energiespeicher zwischen einer Ladesäule und der Energieversorgungseinheit 30 mehrfach "pendeln".

## Patentansprüche

1. Mobile Energieversorgungseinheit (30) ausgebildet mit Mitteln zur unterbrechungsfreien Stromversorgung eines externen Stromnetzes (10),
wobei die Energieversorgungseinheit (30) einen Energiespeicher (34), eine erste mit dem Energiespeicher (34) elektrisch verbundene Schnittstelle (31) zur Energieübertragung und eine zweite mit dem Energiespeicher (34) elektrisch verbundene Schnittstelle (32) zur Energieübertragung sowie eine Elektronik (33) aufweist,
wobei die erste Schnittstelle (31) und die zweite Schnittstelle (32) jeweils bidirektional ausgebildet sind und die Elektronik (33) ausgebildet ist, ein Laden des Energiespeichers (34) über die erste Schnittstelle (31) und die zweite Schnittstelle (32) und ein Entladen des Energiespeichers (34) über die erste Schnittstelle (31) und die zweite Schnittstelle (32) zu überwachen und zu regeln.

2. Energieversorgungseinheit nach Anspruch 1,
wobei die zweite Schnittstelle (32) als Weitbereichseingang ausgebildet ist und/oder die Elektronik (33) einen Weitbereichswandler umfasst, welcher ausgebildet ist, eine über die zweite Schnittstelle (32) zugeführte elektrische Energie für das Laden des Energiespeichers (34) zumindest im Spannungsniveau umzuwandeln.

3. Energieversorgungseinheit nach einem der vorhergehenden Ansprüche,
wobei der Energiespeicher (34) ein Akkumulator und insbesondere ein Lithium-Ionen-Akkumulator ist.

4. Energieversorgungseinheit nach einem der vorhergehenden Ansprüche,
wobei die erste Schnittstelle (31) ein Steckverbinder und insbesondere ein Hochstromsteckverbinder ist.

5. Energieversorgungseinheit nach einem der vorhergehenden Ansprüche,
wobei die zweite Schnittstelle (32) ein Steckverbinder und insbesondere ein Hochstromsteckverbinder ist
und wobei die zweite Schnittstelle insbesondere als ein Typ 1-Stecker, eine Typ 1-Buchse, ein Typ 2-Stecker, eine Typ 2-Buchse, ein Combo-Stecker oder eine Combo-Buchse ausgebildet ist.

6. Energieversorgungseinheit nach einem der vorhergehenden Ansprüche,
wobei die zweite Schnittstelle (32) ausgebildet ist, mit einem Energiespeicher (22) eines Elektro-Fahrzeugs (20) verbunden zu werden und der Energiespeicher (34) der Energieversorgungseinheit (30) dadurch mit dem Energiespeicher (22) des Elektro-Fahrzeugs (20) verbindbar ist.

7. System (1) aus einer Energieversorgungseinheit (30) nach einem der vorhergehenden Ansprüche und einem externen Energiespeicher (22),
wobei die Energieversorgungseinheit (30) über ihre zweite Schnittstelle (32) mit dem externen Energiespeicher (22) verbindbar und der Energiespeicher (34) der Energieversorgungseinheit (30) durch den externen Energiespeicher (22) elektrisch aufladbar ist.

8. System nach dem vorhergehenden Anspruch,
ferner umfassend ein externes Stromnetz (10),
wobei die Energieversorgungseinheit (30) über ihre erste Schnittstelle (31) mit dem externen Stromnetz (10) verbindbar ist und ausgebildet ist, elektrische Energie über die erste Schnittstelle (31) an das externe Stromnetz (10) abzugeben und/oder elektrische Energie über die erste Schnittstelle (31) von dem externen Stromnetz (10) zum Laden des Stromspeichers (34) der Energieversorgungseinrichtung (30) aufzunehmen.

9. System nach einem der beiden vorhergehenden Ansprüche,
wobei der externe Energiespeicher (22) ein Energiespeicher (22) eines Elektro-Fahrzeugs (20) ist.

## Claims

1. A mobile energy supply unit (30) configured with means for uninterruptible power supply of an external power grid (10),
wherein the energy supply unit (30) has an energy store (34), a first interface (31) that is electrically connected to the energy store (34) for transmitting energy, and a second interface (32) that is electrically connected to the energy store (34) for transmitting energy, as well as electronics (33),
wherein the first interface (31) and the second interface (32) are each configured bidirectionally and the electronics (33) are configured to monitor and control charging of the energy store (34) via the first interface (31) and the second interface (32) and discharging of the energy store (34) via the first interface (31) and the second interface (32).

2. The energy supply unit according to claim 1,
wherein the second interface (32) is configured as a wide-range input and/or the electronics (33) comprise a wide-range converter that is configured to convert at least a voltage level of electrical energy supplied via the second interface (32) for charging the energy store (34).

3. The energy supply unit according to any one of the preceding claims,
wherein the energy store (34) is an accumulator and especially a lithium-ion accumulator.

4. The energy supply unit according to any one of the preceding claims,
wherein the first interface (31) is a plug connector and especially a high-power plug connector.

5. The energy supply unit according to any one of the preceding claims,
wherein the second interface (32) is a plug connector and especially a high-power plug connector
and wherein the second interface is especially configured as a type 1 plug, a type 1 socket, a type 2 plug, a type 2 socket, a combined plug or a combined socket.

6. The energy supply unit according to any one of the preceding claims,
wherein the second interface (32) is configured to be connected to an energy store (22) of an electric vehicle (20) and the energy store (34) of the energy supply unit (30) being thereby connectable to the energy store (22) of the electric vehicle (20).

7. A system (1) consisting of an energy supply unit (30) according to any one of the preceding claims and an external energy store (22),
wherein the energy supply unit (30) is connectable to the external energy store (22) via its second interface (32) and the energy store (34) of the energy supply unit (30) is electrically chargeable via the external energy store (22).

8. The system according to the preceding claim,
further comprising an external power grid (10),
wherein the energy supply unit (30) is connectable to the external power grid (10) via its first interface (31) and is configured to release electrical energy to the external power grid (10) via the first interface (31) and/or to receive electrical energy from the external power grid (10) via the first interface (31) for charging the power store (34) of the energy supply device (30).

9. The system according to any one of the two preceding claims,
wherein the external energy store (22) is an energy store (22) of an electric vehicle (20).

## Revendications

1. Unité d'alimentation électrique mobile (30) équipée de moyens d'alimentation sans interruption vers un réseau électrique externe (10),
dans laquelle l'unité d'alimentation électrique (30) comprend un accumulateur d'énergie (34), une première interface (31) reliée électriquement à l'accumulateur d'énergie (34) pour le transfert d'énergie et une deuxième interface (32) reliée électriquement à l'accumulateur d'énergie (34) pour le transfert d'énergie, ainsi qu'un système électronique (33),
dans laquelle la première interface (31) et la deuxième interface (32) sont chacune bidirectionnelles et le système électronique (33) est conçue pour surveiller et réguler le chargement de l'accumulateur d'énergie (34) via la première interface (31) et la deuxième interface (32) et le déchargement de l'accumulateur d'énergie (34) via la première interface (31) et la deuxième interface (32).

2. Unité d'alimentation électrique selon la revendication 1,
dans laquelle la deuxième interface (32) est conçue comme une entrée à large plage et/ou le système électronique (33) comprend un convertisseur à large plage qui est conçu pour convertir l'énergie électrique fournie via la deuxième interface (32) pour charger l'accumulateur d'énergie (34) au moins au niveau de tension.

3. Unité d'alimentation électrique selon l'une quelconque des revendications précédentes,
dans laquelle l'accumulateur d'énergie (34) est un accumulateur, en particulier un accumulateur lithium-ion.

4. Unité d'alimentation électrique selon l'une quelconque des revendications précédentes,
dans laquelle la première interface (31) est un connecteur enfichable, en particulier un connecteur enfichable à courant fort.

5. Unité d'alimentation électrique selon l'une quelconque des revendications précédentes,
dans laquelle la deuxième interface (32) est un connecteur enfichable, en particulier un connecteur enfichable à courant fort.
et dans laquelle la deuxième interface est notamment un connecteur de type 1, une connecteur de type 1, une fiche de type 2, un connecteur de type 2, une fiche combinée ou un connecteur combiné.

6. Unité d'alimentation électrique selon l'une quelconque des revendications précédentes,
dans laquelle la deuxième interface (32) est conçue pour être reliée à un accumulateur d'énergie (22) d'un véhicule électrique (20) et l'accumulateur d'énergie (34) de l'unité d'alimentation en énergie (30) peut ainsi être relié à l'accumulateur d'énergie (22) du véhicule électrique (20).

7. Système (1) constitué par une unité d'alimentation en énergie (30) selon l'une quelconque des revendications précédentes et un accumulateur d'énergie externe (22),
dans lequel l'unité d'alimentation en énergie (30) peut être connectée à l'accumulateur d'énergie externe (22) via sa deuxième interface (32) et l'accumulateur d'énergie (34) de l'unité d'alimentation en énergie (30) peut être rechargé électriquement par l'accumulateur d'énergie externe (22).

8. Système selon la revendication précédente,
comprenant en outre un réseau électrique externe (10),
dans lequel l'unité d'alimentation en énergie (30) peut être connectée au réseau électrique externe (10) via sa première interface (31) et est conçue pour fournir de l'énergie électrique au réseau électrique externe (10) via la première interface (31) et/ou recevoir de l'énergie électrique du réseau électrique externe (10) via la première interface (31) pour charger l'accumulateur d'électricité (34) du dispositif d'alimentation en énergie (30).

9. Procédé selon l'une des deux revendications précédentes,
dans lequel l'accumulateur d'énergie externe (22) est un accumulateur d'énergie (22) d'un véhicule électrique (20).
